# EUROPÄISCHE PATENTSCHRIFT

(11) **EP 2 951 468 B1**
(45) Veröffentlichungstag und Bekanntmachung des Hinweises auf die Patenterteilung: **03.04.2019**
(21) Anmeldenummer: 14702746.0
(22) Anmeldetag: 30.01.2014
(51) Int. Cl.: F16H 59/10, G05G 1/04, F16H 61/24

(54) **STELLGLIED, INSBESONDERE FÜR EIN KRAFTFAHRZEUG**
CONTROL ELEMENT, IN PARTICULAR FOR A MOTOR VEHICLE
ACTIONNEUR DESTINÉ EN PARTICULIER À UN VÉHICULE AUTOMOBILE

(30) Priorität: 30.01.2013 DE 102013001551
(43) Veröffentlichungstag der Anmeldung: 09.12.2015
(73) Patentinhaber: Marquardt GmbH, 78604 Rietheim-Weilheim (DE)
(72) Erfinder: BUSCHLE, Roland, 78570 Mühleim (DE); CONZELMANN, Martin, 72461 Albstadt (DE)
(74) Vertreter: Otten, Roth, Dobler & Partner mbB Patentanwälte
(86) Internationale Anmeldenummer: PCT/EP2014/000256
(87) Internationale Veröffentlichungsnummer: WO 2014/117942

(56) Entgegenhaltungen:
- DE-A1- 10 059 383
- DE-A1-102005 023 926
- DE-A1-102007 058 850
- DE-A1-102008 058 650
- US-A1- 2012 085 193

## Beschreibung

Die Erfindung betrifft ein Stellglied nach dem Oberbegriff des Patentanspruchs 1. Stellglieder, wie in der Art eines Joystick- und/oder Cursor-Schalters ausgebildete elektrische und/oder elektronische Schaltvorrichtungen, dienen zur manuellen Ansteuerung und/oder Auslösung von Funktionen in einem Kraftfahrzeug. Unter anderem werden solche Schaltvorrichtungen zur Eingabe von Daten für ein elektrisches Gerät durch einen Benutzer verwendet, beispielsweise bei Autoradios, Navigationsgeräten, Bordcomputer o. dgl. Geräten im Kraftfahrzeug. Insbesondere lässt sich ein solches Stellglied auch als elektronischer Gangwahlschalter für ein durch Shift-by-Wire gesteuertes Getriebe im Kraftfahrzeug verwenden.

Ein solches, aus der gattungsgemäßen DE 100 59 383 A1 bekanntes Stellglied weist eine Handhabe, die beispielsweise in der Art eines Wählhebels ausgebildet sein kann, sowie einen Antrieb auf. Die Handhabe ist an einem Träger bewegbar gelagert, derart dass die Handhabe manuell verstellbar ist. Insoweit fehlt es dem Stellglied an weiterer Funktionalität.
Weitere Stellglieder sind in der DE 10 2007 058 850 A1, der DE 10 2005 023 926 A1, der US 2012/085193 A1 und der DE 10 2008 058 650 A1 beschrieben.
Der Erfindung liegt die Aufgabe zugrunde, das Stellglied im Hinblick auf dessen Funktionalität weiterzuentwickeln. Insbesondere soll das Stellglied im Hinblick auf ein Sperr- und/oder Positioniersystem für die Handhabe weiterentwickelt werden. Insbesondere sollen weitere Forderungen hinsichtlich Schaltgeschwindigkeit und/oder Robustheit und/oder Geräuschentwicklung für das Stellglied erfüllt sein.

Diese Aufgabe wird bei einem gattungsgemäßen Stellglied durch die kennzeichnenden Merkmale des Anspruchs 1 gelöst.

Beim erfindungsgemäßen Stellglied steht der Antrieb mittels einer Kurbelwelle und einer Pleuelstange mit der Handhabe in Wirkverbindung und/oder ist mit der Handhabe in Wirkverbindung bringbar. Und zwar derart, dass mittels des Antriebs die Handhabe nichtmanuell positionierbar und/oder die manuelle Bewegung der Handhabe sperrbar und/oder die manuelle Bewegung der Handhabe freigebbar ist. Geschaffen ist dadurch insbesondere ein Sperr- und/oder Positioniersystem für Shift-by-Wire-Schaltungen. Weitere Ausgestaltungen der Erfindung sind Gegenstand der Unteransprüche.

In einer zweckmäßigen sowie einfachen Ausgestaltung kann der Antrieb die Kurbelwelle bewegen. Die Pleuelstange kann von der Kurbelwelle bewegt werden. Die Wirkverbindung zur Handhabe kann wiederum mittels der Pleuelstange bewirkt werden.

Bei einem Stellglied mit weiteren Funktionalitäten kann durch Ansteuerung des Antriebs die Pleuelstange in wenigstens zwei Positionen bewegbar sein. In der ersten Position kann dann die manuelle Bewegung der Handhabe in deren Ausgangslage gesperrt sein. In der zweiten Position kann die manuelle Bewegung der Handhabe aus deren Ausgangslage freigegeben sein. Bei der Rückstellung von der zweiten Position in die erste Position kann die Handhabe nichtmanuell in deren Ausgangslage bewegt werden. In kostengünstiger Art und Weise kann somit mittels eines einzigen Antriebs sowohl eine Sperrung sowie eine Freigabe der Handhabe für die manuelle Bewegung als auch die nichtmanuelle Rückstellung der Handhabe realisiert werden.

In einfacher Art und Weise kann die Pleuelstange kraft- und/oder formschlüssig mit der Handhabe in Wirkverbindung stehen und/oder in Wirkverbindung bringbar sein. Weiterhin kann es sich anbieten, dass die Pleuelstange mittels eines Gelenks mit der Handhabe in Wirkverbindung steht und/oder in Wirkverbindung bringbar ist. In einer anderen Ausgestaltung kann die Pleuelstange durch Berührung mit der Handhabe in Wirkverbindung stehen und/oder in Wirkverbindung bringbar sein. Schließlich kann in zweckmäßiger Ausgestaltung der Antrieb einen Elektromotor umfassen. In funktionssicherer Art und Weise kann der Elektromotor über ein Getriebe die Kurbelwelle bewegen. Im Hinblick auf eine kompakte Anordnung kann es sich bei dem Getriebe um ein Schneckenradgetriebe handeln.

Das erfindungsgemäße Stellglied eignet sich besonders zur Verwendung in einer Shift-by-Wire-Schaltvorrichtung für ein Getriebe im Kraftfahrzeug, also in einem elektronischen Gangwahlschalter eines Kraftfahrzeugs. In diesem Fall handelt es sich bei der Handhabe um den Wählhebel für die Shift-by-Wire-Schaltvorrichtung. Die Shift-by-Wire-Schaltvorrichtung erzeugt zur Stellung der Handhabe, die manuell vom Benutzer bewegt wird, korrespondierende Signale. Diese Signale dienen dann wiederum zur dementsprechenden Steuerung des Getriebes. Der Wählhebel des Gangwahlschalters kann mit erweiterten Funktionalitäten für die Bedienung durch den Benutzer versehen sein. Und zwar kann der Wählhebel insbesondere für die manuelle Bewegung durch den Benutzer sperr- und/oder freigebbar sein. Insbesondere kann desweiteren der Wählhebel automatisch rückstellbar ausgebildet sein.

Für eine besonders bevorzugte Ausgestaltung ist nachfolgendes festzustellen. Die Sperr- und/oder Positionierfunktion des Wählhebels wird mittels eines Motors mit Schneckenradgetriebe und einer seitlich angeordneten Kurbelwelle mit Pleuelstange realisiert. Durch Rotation der Kurbelwelle und/oder Positionierung der Pleuelstange in der vorderen bzw. hinteren Endlage wird die Schaltbewegung des Wählhebels freigegeben bzw. gesperrt. Rotiert die Kurbelwelle um eine komplette Drehung, so wird der Wählhebel in seine Ausgangslage zurückbewegt.

Die mit der Erfindung erzielten Vorteile bestehen insbesondere darin, dass eine erweiterte Funktionalität für das Stellglied bereitgestellt wird. Darüber hinaus wird auch die Ergonomie für den Benutzer bei Bedienung des Stellglieds weiter gesteigert.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: ein Stellglied gemäß einer Ausführung in schematischer Darstellung,
- Fig. 2: den Antrieb des Stellglieds mit Kurbelwelle und Pleuelstange in perspektivischer Ansicht,
- Fig. 3: den Antrieb mit Kurbelwelle und Pleuelstange in Frontansicht,
- Fig. 4: den Antrieb mit Kurbelwelle und Pleuelstange in Draufsicht,
- Fig. 5a: das Stellglied gemäß einer weiteren Ausführung in schematischer Darstellung, wobei sich die Pleuelstange in einer ersten Position befindet, und
- Fig. 5b: das Stellglied gemäß Fig. 5a, wobei sich die Pleuelstange in einer zweiten Position befindet,
wobei die weitere Ausführung nicht unter die Ansprüche fällt.

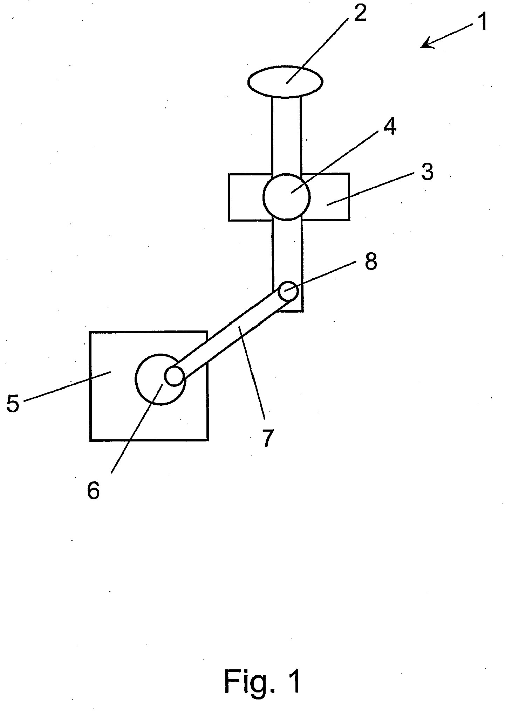

In Fig. 1 ist ein Stellglied 1 zu sehen, das zur manuellen Ansteuerung und/oder Auslösung von Funktionen in einem Kraftfahrzeug dient und insbesondere als Gangwahlschalter für eine Shift-by-Wire-Schaltvorrichtung verwendet wird. Das Stellglied 1 ist mit einer bewegbaren Handhabe 2 in der Art eines Wählhebels versehen. Die Handhabe 2 ist beweglich an einem Träger 3 mittels eines Lagers 4 gelagert. Dadurch ist die Handhabe 2 vom Benutzer manuell verstellbar, wodurch die jeweils gewünschten Funktionen im Kraftfahrzeug ausgelöst werden. Beispielsweise werden bei einem Gangwahlschalter dadurch die gewünschten Fahrstufen für das Getriebe vom Benutzer angewählt.

Das Lager 4 ist in Fig. 1 lediglich schematisch eingezeichnet. Es kann auch beispielsweise in der Art eines Kardanlagers ausgestaltet sein, so dass das Stellglied 1 vom Benutzer in verschiedenen Richtungen bewegbar ist. Dadurch kann eine vielfältige Bedienbarkeit für das Stellglied 1 ermöglicht sein.

Das Stellglied 1 weist einen Antrieb 5 auf. Der Antrieb 5 steht mittels einer Kurbelwelle 6 und einer Pleuelstange 7 mit der Handhabe 2 in Wirkverbindung und/oder ist mit der Handhabe 2 in Wirkverbindung bringbar. Mittels des Antriebs 5, der beispielsweise von einem Steuergerät entsprechend angesteuert werden kann, ist dann die Handhabe 2 nichtmanuell positionierbar und/oder die manuelle Bewegung der Handhabe 2 sperrbar und/oder die manuelle Bewegung der Handhabe 2 freigebbar. Hierzu steht die Pleuelstange 7 kraft- und/oder formschlüssig mit der Handhabe 2 in Wirkverbindung und/oder ist mit der Handhabe 2 in Wirkverbindung bringbar.

Gemäß der in Fig. 1 gezeigten ersten Ausführung steht die Pleuelstange 7 mittels eines Gelenks 8 mit der Handhabe 2 in Wirkverbindung und/oder ist mittels des Gelenks 8 mit der Handhabe in Wirkverbindung bringbar. Der Antrieb 5 bewegt dann die Kurbelwelle 6. Die Pleuelstange 7 wird wiederum von der Kurbelwelle 6 bewegt. Die Wirkverbindung vom Antrieb 5 zur Handhabe 2 wird schließlich mittels der Pleuelstange 7 über das Gelenk 8 bewirkt.

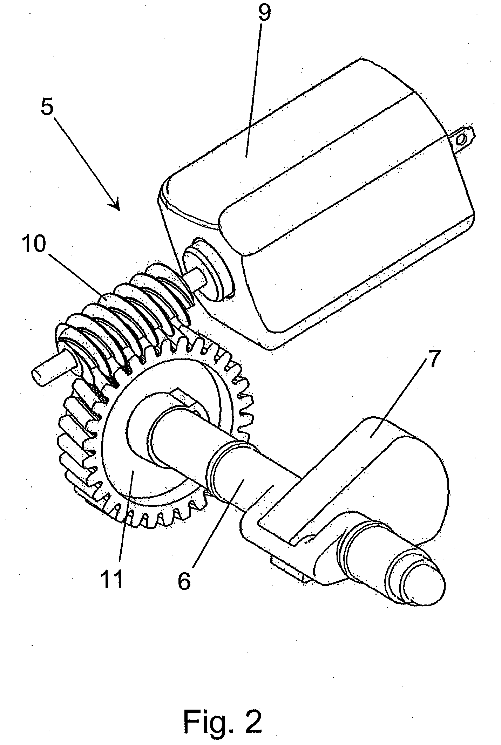

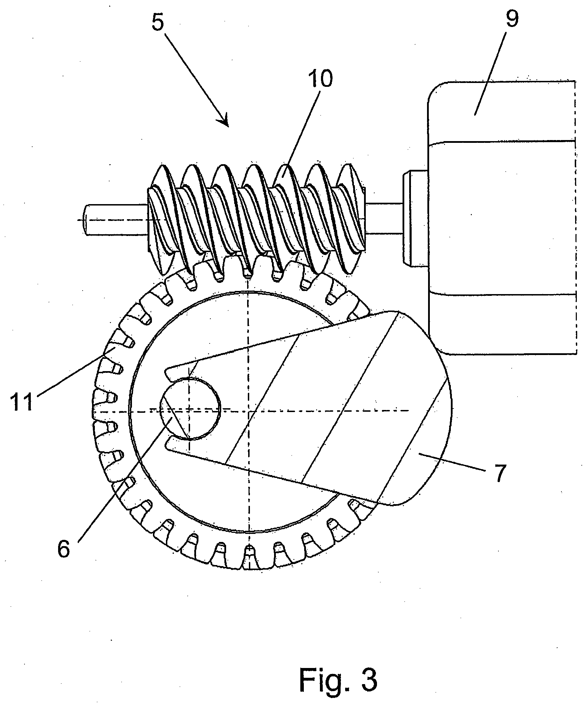

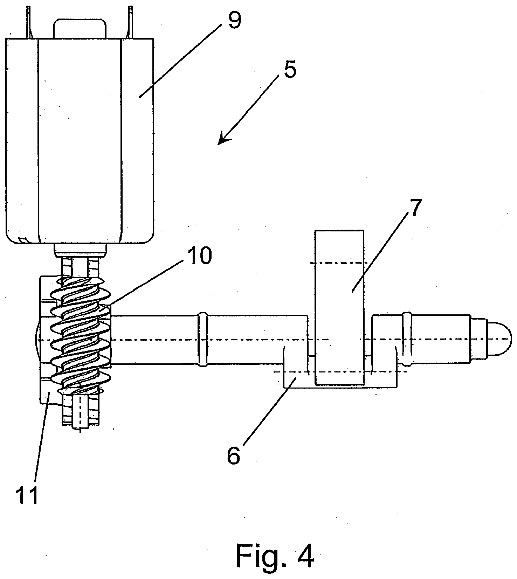

Wie man anhand von Fig. 2, Fig. 3 und Fig. 4 sieht, umfasst der Antrieb 5 einen Elektromotor 9. Der Elektromotor 9 bewegt über ein Getriebe die Kurbelwelle 6. Und zwar handelt es sich vorliegend um ein Schneckenradgetriebe, das aus einer an der Abtriebswelle des Elektromotors 9 angeordneten Schnecke 10 sowie einem an der Kurbelwelle 6 befindlichen, mit der Schnecke 10 kämmenden Zahnrad 11 besteht. Aufgrund der kompakten Bauweise eines solchen Antriebs 5 lässt sich dieser auch in einem engen Bauraum des Stellglieds 1 unterbringen.

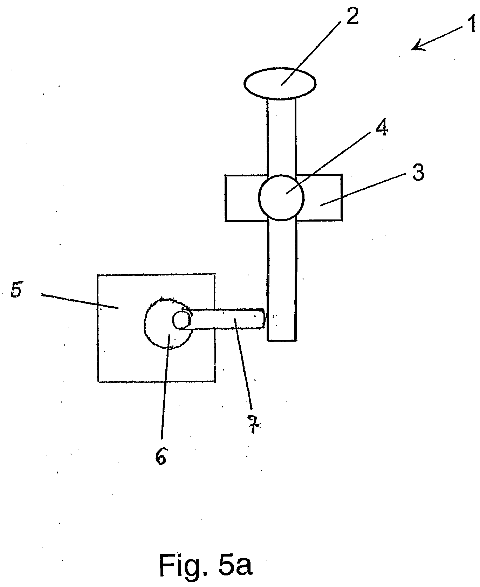

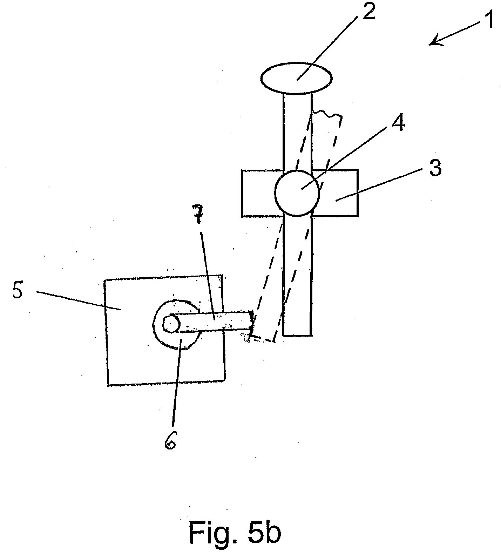

In einer weiteren Ausführung für das Stellglied 1, die in Fig. 5a und Fig. 5b zu sehen ist, steht die Pleuelstange 7 durch Berührung mit der Handhabe 2 in Wirkverbindung und/oder ist durch Berührung mit der Handhabe 2 in Wirkverbindung bringbar. Durch entsprechende Ansteuerung des Antriebs 5 ist die Pleuelstange 7 in wenigstens zwei Positionen bewegbar. In der ersten Position der Pleuelstange 7, die in Fig. 5a gezeigt ist, ist die manuelle Bewegung der Handhabe 2 in deren Ausgangslage gesperrt, indem die Pleuelstange 7 an einem auslegerartigen Teil der Handhabe 2 berührend anliegt. In der zweiten Position der Pleuelstange 7, die in Fig. 5b gezeigt ist, hingegen ist die manuelle Bewegung der Handhabe 2 aus deren Ausgangslage freigegeben. Hierbei ist die Pleuelstange 7 von dem auslegerartigen Teil der Handhabe 2 in der Ausgangslage der Handhabe 2 entfernt. Wie man der Fig. 5b entnimmt, kann nunmehr aufgrund der fehlenden Berührung die Handhabe 2 bewegt werden, beispielsweise wie mit der gestrichelten Stellung des auslegerartigen Teils der Handhabe 2 angedeutet ist. Bei der Rückstellung der Pleuelstange 7 von der zweiten Position gemäß Fig. 5b in die erste Position gemäß Fig. 5a wird die Handhabe 2 von der Pleuelstange 7, also nichtmanuell, in deren Ausgangslage bewegt, indem die Pleuelstange 7 die Handhabe 2 durch Anlage an dem auslegerartigen Teil der Handhabe 2 zurückbewegt.

Ein derartiges Stellglied 1 lässt sich für einen Gangwahlschalter in Kraftfahrzeugen verwenden. Bei einer solchen Shift-by-Wire-Schaltvorrichtung für das Getriebe im Kraftfahrzeug handelt es sich bei der Handhabe 2 um den Wählhebel für die Shift-by-Wire-Schaltvorrichtung und die Shift-by-Wire-Schaltvorrichtung erzeugt zur Stellung der Handhabe 2 korrespondierende Signale, wobei die Signale zur Steuerung des Getriebes dienen. Die Erfindung ist jedoch nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. Neben Kraftfahrzeuganwendungen kann ein derartiges Stellglied 1 in vorteilhafter Weise auch als Eingabemittel für Computer, Werkzeugmaschinen, Haushaltsgeräte o. dgl. eingesetzt werden.

### Bezugszeichen-Liste:

- 1:: Stellglied
- 2:: Handhabe / Wählhebel
- 3:: Träger
- 4:: Lager
- 5:: Antrieb
- 6:: Kurbelwelle
- 7:: Pleuelstange
- 8:: Gelenk
- 9:: Elektromotor
- 10:: Schnecke
- 11:: Zahnrad

## Patentansprüche

1. Stellglied, insbesondere Schaltvorrichtung zur manuellen Ansteuerung und/oder Auslösung von Funktionen in einem Kraftfahrzeug, mit einer Handhabe (2), wobei die Handhabe (2) an einem Träger (3) derart gelagert ist, dass die Handhabe (2) manuell verstellbar ist, und wobei ein Antrieb (5) vorgesehen ist, **dadurch gekennzeichnet, dass** der Antrieb (5) mittels einer Kurbelwelle (6) und einer Pleuelstange (7) mit der Handhabe (2) in Wirkverbindung steht und/oder in Wirkverbindung bringbar ist, derart dass mittels des Antriebs (5) die Handhabe (2) nichtmanuell positionierbar und/oder die manuelle Bewegung der Handhabe (2) sperrbar und/oder die manuelle Bewegung der Handhabe (2) freigebbar ist.

2. Stellglied nach Anspruch 1, **dadurch gekennzeichnet, dass** der Antrieb (5) die Kurbelwelle (6) bewegt, dass vorzugsweise die Pleuelstange (7) von der Kurbelwelle (6) bewegt wird, und dass weiter vorzugsweise die Wirkverbindung zur Handhabe (2) mittels der Pleuelstange (7) bewirkt wird.

3. Stellglied nach Anspruch 1 oder 2, **dadurch gekennzeichnet, dass** durch Ansteuerung des Antriebs (5) die Pleuelstange (7) in wenigstens zwei Positionen bewegbar ist, wobei vorzugsweise in der ersten Position die manuelle Bewegung der Handhabe (2) in deren Ausgangslage gesperrt ist, wobei weiter vorzugsweise in der zweiten Position die manuelle Bewegung der Handhabe (2) aus deren Ausgangslage freigegeben ist, und wobei noch weiter vorzugsweise bei der Rückstellung von der zweiten in die erste Position die Handhabe (2) nichtmanuell in deren Ausgangslage bewegt wird.

4. Stellglied nach Anspruch 1, 2 oder 3, **dadurch gekennzeichnet, dass** die Pleuelstange (7) kraft- und/oder formschlüssig mit der Handhabe (2) in Wirkverbindung steht und/oder bringbar ist.

5. Stellglied nach einem der Ansprüche 1 bis 4, **dadurch gekennzeichnet, dass** die Pleuelstange (7) mittels eines Gelenks (8) mit der Handhabe (2) in Wirkverbindung steht und/oder bringbar ist.

6. Stellglied nach einem der Ansprüche 1 bis 5, **dadurch gekennzeichnet, dass** die Pleuelstange (7) durch Berührung mit der Handhabe (2) in Wirkverbindung steht und/oder bringbar ist.

7. Stellglied nach einem der Ansprüche 1 bis 6, **dadurch gekennzeichnet, dass** der Antrieb (5) einen Elektromotor (9) umfasst, und dass vorzugsweise der Elektromotor (9) über ein Getriebe, insbesondere ein Schneckenradgetriebe, die Kurbelwelle (6) bewegt.

8. Shift-by-Wire-Schaltvorrichtung für ein Getriebe im Kraftfahrzeug mit einem Stellglied (1) nach einem der Ansprüche 1 bis 7, **dadurch gekennzeichnet, dass** es sich bei der Handhabe (2) um den Wählhebel für die Shift-by-Wire-Schaltvorrichtung handelt, und dass die Shift-by-Wire-Schaltvorrichtung zur Stellung der Handhabe (2) korrespondierende Signale erzeugt, wobei die Signale zur Steuerung des Getriebes dienen.

## Claims

1. A control element, particularly a switching device for the manual control and/or triggering of functions in a motor vehicle, with a handle (2), wherein the handle (2) is mounted on a carrier (3) such that the handle (2) is manually adjustable, and wherein a drive mechanism (5) is provided, **characterised in that** the drive mechanism (5) is in, and/or can be brought into, operative connection with the handle (2) by means of a crankshaft (6) and a connecting rod (7), such that by means of the drive mechanism (5) the handle (2) is non-manually positionable and/or the manual movement of the handle (2) can be blocked and/or the manual movement of the handle (2) can be released.

2. The control element according to claim 1 **characterised in that** the drive mechanism (5) moves the crankshaft (6), the connecting rod (7) is preferably moved by the crankshaft (6), and **in that** the operative connection to the handle (2) is further preferably effected by means of the connecting rod (7).

3. The control element according to claim 1 or 2, **characterised in that** by controlling the drive mechanism (5), the connecting rod (7) is movable into at least two positions, wherein in the first position the manual movement of the handle (2) into its starting position is preferably blocked, wherein, more preferably in the second position the manual movement of the handle (2) from its starting position is released, and wherein yet more preferably upon the resetting from the second into the first position, the handle (2) is non-manually moved into its starting position.

4. The control element according to claim 1, 2 or 3, **characterised in that** the connecting rod (7) is in operative connection, and/or can be brought into operative connection, with the handle (2) in a force-fitting or form-fitting manner.

5. The control element according to one of claims 1 to 4, **characterised in that** the connecting rod (7) is in operative connection, and/or can be brought into operative connection, with the handle (2) by means of a hinge (8).

6. The control element according to one of claims 1 to 5, **characterised in that** the connecting rod (7) is in operative connection, and/or can be brought into operative connection, with the handle (2) by means of contact.

7. The control element according to one of claims 1 to 6, **characterised in that** the drive mechanism (5) comprises an electric motor (9), and advantageously the electric motor (9) moves the crankshaft (6) by means of a gear, particularly a worm gear.

8. A shift-by-wire switching device for a gear in the motor vehicle with a control element (1) according to one of claims 1 to 7, **characterised in that** the handle (2) is a selector lever for the shift-by-wire switching device, and the shift-by-wire switching device generates corresponding signals for the positioning of the handle (2), wherein the signals are used to control the gear.

## Revendications

1. Actionneur, en particulier dispositif de commutation pour la commande manuelle et / ou le déclenchement de fonctions dans un véhicule automobile, comportant une manette (2), ladite manette (2) étant montée sur un support (3) de sorte que la manette (2) puisse être réglée manuellement, et dans lequel un entraînement (5) est prévu, **caractérisé en ce que** ledit entraînement (5) est en liaison fonctionnelle et / ou peut être mis en liaison fonctionnelle avec la manette (2) par le biais d'un vilebrequin (6) et d'une bielle (7), de manière à ce que la manette (2) puisse être positionnée de manière non manuelle au moyen de l'entraînement (5),et / ou que le mouvement manuel de la manette (2) puisse être verrouillé et / que ou le mouvement manuel de la manette (2) puisse être libéré.

2. Actionneur selon la revendication 1, **caractérisé en ce que** l'entraînement (5) déplace le vilebrequin (6), que la bielle (7) est de préférence déplacée par le vilebrequin (6) et que, toujours de préférence, la liaison fonctionnelle avec la manette (2) est réalisée par le biais de la bielle (7).

3. Actionneur selon la revendication 1 ou 2, **caractérisé en ce que** la bielle (7) peut être déplacée dans au moins deux positions par la commande de l'entraînement (5), le mouvement manuel de la manette (2) étant bloqué dans sa position initiale de préférence dans la première position, le mouvement manuel de la manette (2) étant libéré de sa position initiale, toujours de préférence, dans la deuxième position, et la manette (2) étant déplacée de manière non manuelle dans sa position initiale, toujours de préférence, lors du retour de la deuxième position à la première.

4. Actionneur selon la revendication 1, 2 ou 3, **caractérisé en ce que** la bielle (7) est mise et / ou peut être mise en liaison fonctionnelle avec la manette (2) par adhérence et / ou par embrayage mécanique.

5. Actionneur selon l'une des revendications 1 à 4, **caractérisé en ce que** la bielle (7) est mise et / ou peut être mise en liaison fonctionnelle avec la manette (2) par le biais d'une articulation (8).

6. Actionneur selon l'une des revendications 1 à 5, **caractérisé en ce que** la bielle (7) est mise et / ou peut être mise en liaison fonctionnelle avec la manette (2) par contact.

7. Actionneur selon l'une des revendications 1 à 6, **caractérisé en ce que** l'entraînement (5) comprend un moteur électrique (9) et que, de préférence, le moteur électrique (9) déplace le vilebrequin (6) par l'intermédiaire d'un engrenage, et singulièrement un engrenage à vis sans fin.

8. Dispositif de changement de vitesse par fil (shift-by-wire) pour une transmission dans le véhicule automobile, comportant un actionneur (1) selon l'une des revendications 1 à 7, **caractérisé en ce que** la manette (2) constitue le levier sélecteur pour le dispositif de changement de vitesse par fil, et que le dispositif de changement de vitesse par fil génère des signaux correspondants pour la position de la manette (2), lesdits signaux étant utilisés pour commander la transmission.
